# EUROPEAN PATENT APPLICATION

(11) **EP 1 327 776 A2**
(43) Date of publication of application: **16.07.2003**
(21) Application number: 02425793.3
(22) Date of filing: 23.12.2002
(51) Int. Cl.: F04B 49/06, H02H 7/08, F25B 49/02

(54) **Overload control for a compressor system**

(30) Priority: 11.01.2002 IT MI20020046
(71) Applicant: B.D.G. EL. S.P.A., 21020 Bardello (Varese) (IT)
(72) Inventor: Del Grande, Carlo, 96100 Siracusa (IT)
(74) Representative: Tansini, Elio Fabrizio

(57) **Abstract**

A control group for compressors of refrigerators, comprising a device for the starting control (2) and a device for the overload control (3). The former comprises a thermosensitive element (10) active on a switch (20) to pilot it between a first operating condition, in which the switch (20) enables a supply current to be delivered to a starting winding (30) and a second operating condition, in which the switch (20) inhibits inflow of the same supply current thereto. The device for the overload control (3) comprises a processing unit (60) that calculates a main parameter depending on a characteristic compressor magnitude (110) detected by a detecting block (10), compares the main parameter with a value contained in a memory (50) and generates an alarm signal (100).

## Description

The present invention relates to a control group for compressors, in particular for compressors of refrigerating apparatuses.

It is known that compressors for refrigerating apparatuses consist of particular electromechanical machinery characterized by the presence of two distinct electric windings: a "starting" winding, to supply the necessary power at the beginning of the rotor rotation, and an "operation" winding used when the motor works under normal working conditions, to keep the desired rotation speed of the rotor.

At the end of the starting step, the starting winding must be disconnected from the power supply (i.e. current must no longer run through said winding), since, if not so, it wound be in an overheating condition that could jeopardise the integrity and therefore correct operation of same.

A possible available solution in accordance with the known art consists in a control technique characterized by use of electromechanical devices (typically relays) capable of performing a switching function.

As the motor terminates the starting step, current in the operation circuit is insufficient to keep the relay energized; consequently the latter modifies its operating condition and opens the power circuit of the starting winding.

These devices however, in addition to being disadvantageous from an economic point of view, have several drawbacks both in terms of construction (since they are made of movable mechanical parts), and in terms of ductility, since they must be designed and made in a specific manner for each different compressor typology.

Therefore, in an attempt to solve the above listed drawbacks, different control circuits have been made that use variable-resistance resistors (PTC thermistors). A resistor of this type is associated with the starting winding; as far as the resistor temperature is under a given value, i.e. the Curie point of the material of which the resistor is made, the supply current is allowed to flow through the winding.

When, on the contrary, temperature increases beyond the critical threshold, the winding power supply is interrupted, causing the starting step to end. For correct operation of the control system, the PTC sizes together with the power supply current are to be suitably determined so that the power supply current may heat the thermistor until passing the Curie point exactly at the end of the initial transient step for motor starting.

The substantial drawback present in the last-mentioned control typology resides in that, in order to correctly perform its function, the PTC must have rather important sizes.

Consequently, at the end of the starting step, in order to keep the PTC in its non-conduction form, a continuous current supply of a significant intensity is required, which will give rise to an important heat dissipation and to very high consumptions.

In connection with the operation step under normal working conditions, the motor used by the compressor further requires a second control system adapted to detect a possible overheating of the compressor and, should this overheating take place, to avoid damages to the motor itself and/or to the whole structure of the compressor.

Problems of this kind can arise for example either as a result of excessive requests by the apparatus (typically, if doors have not been correctly closed or items the temperature of which is too high have been placed within the apparatus), or following mechanical failures of the motor (rotor jamming, for example).

Generally however, an excessive increase in the compressor temperature is due to an overload condition under which the compressor itself is brought to operate.

Actually systems for this type of control consist of a bimetallic disc with which one resistance put in series with the two compressor windings is operatively associated.

The bimetallic strip is by itself capable of detecting slow thermal transients connected with some overload conditions, such as introduction of articles of a very high temperature into the apparatus; in this case, the compressor temperature grows rather slowly and the bimetallic disc placed on an outer surface of the compressor itself, succeeds in "following" these thermal dynamics by varying, in turn, its temperature and consequently its sizes and causing opening of the compressor power circuit, on reaching of a predetermined temperature (the so-called "trigger temperature" of the bimetallic disc).

On the contrary, at the moment that a mechanical failure occurs, such as rotor jamming for example, the supply current quickly increases beyond a given threshold and the resistance temperature increases correspondingly; the heat thus generated acts on the bimetallic disc that, following the temperature increase, varies its sizes acting on the winding power circuit again and in an appropriate manner.

This typology of control systems too has some drawbacks. First of all, the bimetallic-strip control systems have a very high specific character, due to the fact that the sizes and thermal-conduction parameters of the strip must be suitably adapted depending on the structural and design features of the compressor. Consequently the logistic organization connected with large mass productions is very complicated, which will bring about an increase in costs above all for management of orders and inventories.

Accordingly, it is an object of the present invention to solve the above mentioned drawbacks.

In particular, the present invention aims at providing a control group for compressors, in particular for compressors of refrigerating apparatuses which is equipped with a device for the starting control and characterized by reduced consumptions, in particular during operation of the compressor under normal working conditions.

It is a further aim of the present invention to provide a control group for compressors employing a system for the overload control which is reliable and convenient from an economic point of view.

It is a still further aim of the present invention to provide a control group for compressors in which the system for the overload control can be easily adapted to different compressor typologies, i.e. without involving substantial structural and/or operational modifications both in the compressor and in the control system itself.

The above aims are substantially achieved by a control group for compressors, in particular for compressors of refrigerating apparatuses in accordance with the features recited in the appended claims.

Further features and advantages will become more apparent from the description of an embodiment of a control group for compressors, in particular for control systems of refrigerating apparatuses given by way of non-limiting example, with reference to the accompanying drawings, in which:
- Fig. 1 is a block diagram of a control group in accordance with the present invention;
- Fig. 2a is a block diagram of a first embodiment of a device employed in the control group in Fig. 1;
- Fig. 2b is a block diagram of a second embodiment of the device in Fig. 2a.

The control group for compressors in accordance with the present invention is generally denoted by reference numeral 1 in the accompanying figures.

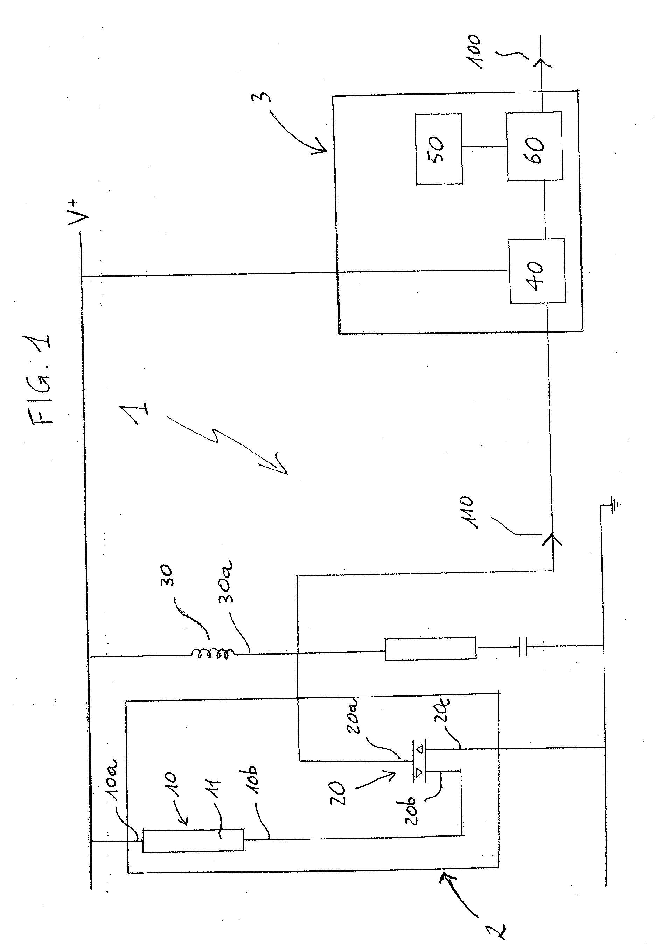

A power supply line to which the circuit (Fig. 1) is connected is identified with symbol "V⁺".

The control group 1 first of all comprises a device for the starting control 2 and a device for the overload control 3. The first device is employed to inhibit power supply to a starting winding 30 of the compressor, at the moment the starting step is concluded; the second device on the contrary is employed to inhibit the compressor from being powered under overloaded conditions.

Each of the two devices can be employed in a separate and independent manner; this means that the control group 1 can be only equipped either with the device for the starting control 2 or with the device for the overload control 3.

However, it is clear that the combined use of the two devices 2, 3 is particularly advantageous, because it makes the control group 1 particularly reliable both in the compressor starting step and in the operation step under normal working conditions.

In more detail, as shown in Fig. 1, the device for the starting control 2 is provided with a switch 20, active on the compressor starting winding 30.

Switch 20 has the task of enabling or inhibiting power supply to the starting winding 30 depending on whether the starting step of the compressor has been concluded or not.

In fact, switch 20 can be piloted between two operating conditions: a first operating condition corresponding to the starting step, in which delivery of the supply current to the starting winding 30 is allowed and a second operating condition corresponding to the step of working under normal conditions in which inflow of said supply current to the starting winding 30 is inhibited.

Advantageously, switch 20 has a first end 20a adapted to be connected to an end 30a of the starting winding 30, a second end 20b intended for reception of a command signal, and a third end 20c connected to a fixed-potential node (preferably to the ground).

The modalities according to which the command signal, designed to pilot switch 20 between the first and second operating conditions, is sent to switch 20 will be better explained in the following.

In a preferred embodiment, switch 20 comprises a semi-conductor element; this semi-conductor element may consist of a Triac.

A Triac, as known, has an input gate through which it is controlled and two terminals enabling connection to the branch of a circuit in which the current flow is to be adjusted, for example.

In the specific case of the device for the starting control 2 in accordance with the present invention, the Triac gate consists of said second end 20b.

As above mentioned, to pilot switch 20 correctly between the first and second operating conditions, a command signal is supplied through the second end 20b.

This command signal comes from a thermosensitive element 10 to be associated with the starting winding 30 of the compressor and connected to switch 20 so that switch 20 is interposed in circuit between the thermosensitive element 20 and the starting winding 30.

The thermosensitive element 10 by enabling or inhibiting current flow to the second end 20b of switch 20, is operatively active on switch 20 to pilot it between the first and second operating conditions.

In particular, the thermosensitive element 10 has a first end 10a susceptible of connection with a fixed-potential node, and a second end 10b connected to the second end 20b of switch 20, to supply said command signal.

Conveniently the thermosensitive element 10 is embodied by a thermistor 11; in this case the command signal consists of a current running through the thermistor 11.

In fact, the electrothermal parameters of thermistor 11 are so sized that, during the compressor starting step, the thermistor 11 temperature keeps under a predetermined threshold, so as to enable a current flow through the thermistor 11 itself; this current runs towards the second end 20b of switch 20, so that the latter, in turn, allows the starting winding 30 to be power supplied. Subsequently, when the compressor reaches its normal working conditions, the thermistor 11 temperature passes said threshold, causing a sudden rise in the thermistor 11 resistance and causing a corresponding changing over of switch 20.

Consequently, the starting winding 20 in this second step, will not be power supplied any longer, since the power delivered by it for the starting step will be no longer necessary.

Combination of a thermistor 11 and a switch 20 of the above described types enables use of thermistors having very smaller sizes than those generally used in devices of the known art.

This results in a significant saving in terms of energy, since a minimum current is required to maintain a thermistor of very reduced sizes in the non-conduction state (for example, current intensities corresponding to about 1/100 of those used in known devices can be employed).

Depending on requirements, thermistor 11 can be of the PTC or, alternatively, the NTC type.

In the preferred embodiment, shown in the accompanying figures, thermistor 11 is of the direct-heating type. This means that, to maintain thermistor 11 in the non-conduction state at the end of the starting step, a small current is sufficient which is picked up from the power supply and caused to run through the thermistor 11 itself.

In an alternative embodiment, not shown in the figures, thermistor 11 can be of the indirect-heating type.

In the last-mentioned case, an outer source is required to supply thermistor 11 with the necessary heat to keep its resistance high. This heat source may consist of an electrothermal element belonging to an overload control device of the compressor.

The electrothermal element in turn can be an auxiliary winding associated with thermistor 11 and, preferably wound around said thermistor 11; the auxiliary winding is arranged to be run through by an auxiliary current, after conclusion of the compressor starting step, so as to supply thermistor 11 with the necessary heat to remain in the non-conduction region.

As above mentioned, the device for starting control 2 can be used in combination with a device for overload control 3.

The device for overload control 3 substantially operates as follows.

During operation under normal working conditions of the compressor, the starting winding 30 is not utilized, since the starting transient as above described is concluded and the power delivered through the starting winding 30 is no longer required.

Consequently the starting winding 30 can be employed to carry out controls on correct operation of the machinery. In particular, it should be noted that, in an overloaded condition of the compressor, the supply current absorbed by the machinery increases to a great extent, giving rise to an increase in the temperature of the operation winding which is exactly passed through by this supply current.

Since the starting winding 30 is closely linked to the operation winding, the thermal dynamics of the starting winding 30 follow those of the operation winding very faithfully and temperature variations in the latter almost instantaneously have repercussions on the former.

In addition, to be taken into account is also the fact that, based on temperature variations, also the electric resistance exhibited by the starting winding 30 is submitted to corresponding increases or decreases, depending on whether temperature rises or becomes lower.

Therefore, if important increases in the resistance of the starting winding 30 are detected, it is possible to recognise possible overloaded conditions under which the compressor is brought to operate and therefore the appropriate measures, if necessary, can be taken.

If operation of the overload control device 3 is analysed in detail, the following is to be noted.

First of all a step is performed for detection of a characteristic magnitude 110 of the compressor; as better clarified in the following, this magnitude is used to verify whether the compressor is in an overloaded condition and consequently in order to generate an appropriate alarm signal 100.

Advantageously, the characteristic compressor magnitude can be a characteristic magnitude of one of the compressor windings and, in particular, a characteristic magnitude of the starting winding 30.

In more detail, the characteristic magnitude of the starting winding 30 may be a magnitude of the electric type.

In fact, in accordance with a first embodiment, said electric magnitude is a current running through the starting winding 30. In this case, the detecting step comprises a sub-step in which a predetermined voltage is applied to the extremities of the starting winding 30 and a sub-step in which the current running through the starting winding 30 is read, upon application of the predetermined voltage.

In an alternative embodiment, on the contrary, the detecting step comprises a sub-step in which a predetermined current is run through the starting winding 30 and a sub-step in which the voltage at the extremities of the starting winding 30 is read when said winding is passed through by the predetermined current.

Said characteristic magnitude 110, after being detected, is processed in order to obtain a corresponding main parameter; said parameter can be a main parameter of one of the compressor windings and conveniently of the starting winding 30.

As pointed out above, the main parameter can be of the electric type and, in particular, it can be the electric resistance exhibited by the starting winding 30.

In fact, if the current running through the winding and the voltage present at the extremities of the latter are known, calculation of the winding resistance can be done immediately.

In particular, in the first embodiment, it is sufficient to carry out a division operation between the predetermined voltage applied and the corresponding current read; in the second embodiment, on the contrary, a division operation is executed between the voltage read at the starting winding 30 extremities and the predetermined current imposed.

When the processing operation is over, a comparing step is carried out in which the calculated main parameter is compared with at least one predetermined previously stored reference value; in other words, it is verified whether the electric resistance of the starting winding 30, due to a temperature increase, has grown beyond a given threshold. If that is the case, an alarm signal 100 is generated; this signal can be either a mere warning signal intended for an operator or an operating signal capable of inhibiting power supply to the compressor upon detection of an overloaded situation.

As regards the predetermined reference value, it should be pointed out that the same can be obtained through a preliminary acquisition step which is preferably carried out before the compressor starts operation under normal working conditions.

In particular, the preliminary acquisition step is carried out before the characteristic compressor magnitude 110 is detected. The preliminary acquisition step conveniently comprises a sub-step in which at one of the compressor windings, an auxiliary characteristic magnitude of the compressor itself is detected; this winding can be the starting winding 30.

The auxiliary characteristic magnitude can be then processed, so as to obtain the predetermined reference value; said value is ultimately stored into a memory 50 so that it is available for the above described comparing step.

Practically, the auxiliary characteristic magnitude that is detected is the voltage at the extremities of the starting winding 30 or the current running through the winding 30 itself; the dual magnitude (i.e. voltage if it is the current to be detected, or current if detection concerns voltage) is known, as it is imposed by the control system.

Consequently, the electric resistance of the starting winding 30 can be calculated when the winding temperature is still substantially the same as the room temperature. The predetermined reference value represents therefore this electric resistance and, as above described, is employed for the comparing step with the resistance of winding 30 under the normal working conditions of the compressor.

If the device for overload control 3 is examined under its structural profile, it is possible to see that it first of all comprises a detecting block 40 to read the characteristic magnitude 110 of the compressor (Fig. 1). This magnitude is used to verify whether the compressor is in an overloaded condition and consequently for the purpose of generating appropriate alarm signals.

As above mentioned, the characteristic magnitude 110 of the compressor can be a characteristic magnitude of one of the compressor windings and in particular a characteristic magnitude of the starting winding 30. In more detail, the characteristic magnitude of the starting winding 30 can be an electric magnitude.

In fact, in a first embodiment diagrammatically shown in Fig. 2a, said electric magnitude is a current running through the starting winding 30. In this case, the detecting block 40 is provided with a voltage generator 41, to be connected to the starting winding 30 to apply a predetermined voltage to said winding 30; associated with said voltage generator 41 is a current-reading unit 42, connected to said starting winding 30 to read the current running through said winding 30 upon application of said predetermined voltage.

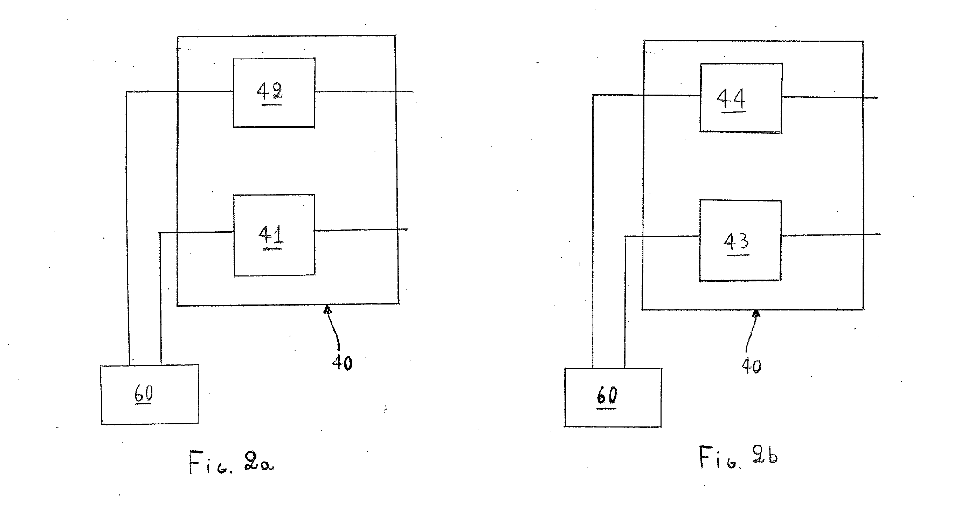

Alternatively, as shown in Fig. 2b, the detecting block 40 may comprise a current generator 43 to be connected to the starting winding 30 to make a predetermined current run in the winding 30; associated with said current generator 30 is a voltage-reading unit 44, capable of reading the voltage at the starting winding 30 extremities, when winding 30 is passed through by the predetermined current imposed by the current generator 43.

In the last-mentioned case, the detected electric magnitude is therefore voltage at the extremities of the starting winding 30.

Advantageously, both the voltage generator 41 and current generator 43 are set to work at a predetermined frequency.

In particular, the voltage generator 41 is adapted to supply the starting winding 30 with the predetermined voltage within predetermined time gaps; said gaps are spaced apart the same distance from each other and preferably have the same time duration.

Likewise, the current generator 43 is set to supply the starting winding 30 with the predetermined current within predetermined time gaps; said gaps are spaced apart the same distance from each other and preferably have the same time duration.

The detecting operation being performed with a certain periodicity or intervals is particularly advantageous in terms of liability of the detection carried out. In fact, above all in the case the detected frequency is substantially the same as the supply-current frequency running in the operation winding during the normal-operation step of the compressor, the exact detection periodicity enables the concerned magnitude to be always measured under the same operating conditions, the interferences caused by the induced magnetic fields generated at the operation winding being greatly limited.

In a preferred embodiment, the voltage generator 41 is a direct-voltage generator; correspondingly, the current generator 43 can be a direct-current generator.

Direct voltage or direct current can be therefore supplied periodically, according to a predetermined frequency, to the starting winding 30 to carry out the corresponding detections.

Practically, the applied voltage or current have a square wave course, frequency of which is advantageously substantially the same as that of the supply current.

After it has been detected, the characteristic magnitude 110 of the compressor must be suitably processed, so that the overload control procedure may be correctly performed, as above described. For the purpose, device 3 comprises a processing unit 60 connected to the detecting block 40 and set to carry out all necessary operations.

In particular, the processing unit 60 is able to process the characteristic magnitude 110 read by the detecting block 40 so as to obtain a main corresponding parameter. This parameter can be a main parameter of one of the compressor windings; preferably, the main parameter is a main parameter of the starting winding 30 of the compressor.

In more detail, the main parameter can be a parameter of the electric type and preferably it can be the electric resistance of the starting winding 30.

In fact, the processing unit 60 is able to calculate the electric resistance of the starting winding 30 depending on the voltage present at the extremities of winding 30 and on the current running through the whole winding 30 itself.

In the case of the embodiment shown in Fig. 2a, the processing unit 60 carries out a division between the predetermined voltage applied to the extremities of the starting winding 30 and the current read by the current-reading unit 42. Vice versa, in the case of the alternative embodiment shown in Fig. 2b, the processing unit 60 carries out a division operation between the voltage measured at the extremities of the starting winding 30 by the voltage-reading unit 44 and the predetermined current imposed by the current generator 43.

Once said main parameter has been obtained, the processing unit 60 carries out a comparison operation between the main parameter thus obtained and at least one value contained in a memory 50 associated with the processing unit 60. In fact, the device for overload control 3 is equipped with a memory 50 the task of which is to hold a predetermined number of reference values corresponding to the characteristic magnitude 110 of the compressor; these reference values will be compared with the main parameter obtained through the processing unit 60.

In a preferred embodiment, at least one predetermined reference value is obtained in a preliminary acquisition step. During this step, the detecting block 40 measures an auxiliary characteristic magnitude of the compressor; preferably, the characteristic magnitude is read at one of the compressor windings and, more preferably, a starting winding 30 of the compressor.

Practically, the auxiliary characteristic magnitude can be the current running in the starting winding 30 or the voltage read at the extremities of the latter. The auxiliary characteristic magnitude is subsequently processed by the processing unit 60 to obtain the predetermined reference value. Advantageously, the predetermined reference value expresses the electric resistance of the starting winding 30 during an initial operation step of the compressor that for example can partly overlap the starting step; the predetermined reference value is therefore calculated as a ratio of the voltage present at the end of the starting winding 30 to the current running in the winding 30 itself, when the winding temperature is still substantially the same as the room temperature (i.e. before operation of the compressor causes a significant temperature rise).

The predetermined reference value thus obtained is stored in memory 50, so that it can be used for said comparison operation.

In addition, an initial theoretical value can be stored in memory 50 before the compressor is operated; this initial theoretical value, following said preliminary acquisition step, is updated and replaced by the predetermined reference value detected as above described.

If necessary, depending on the comparison carried out, the processing unit 60 is able to generate the alarm signal 100. In particular, the processing unit 60 is set to verify whether the electric resistance calculated depending on the current and voltage present on the starting winding 30 during operation under normal working conditions of the compressor is greater than the value stored in memory 50. If that is the case, the processing unit 60 is able to generate said alarm signal 100, to inhibit power supply to the operation winding.

As above said, both devices 2 and 3 can be present in the control group 1; alternatively, the control group 1 can be provided either with the device for the starting control 2 alone or with the device for the overload control 3 alone. In the last-mentioned case, the detecting block 40 and processing unit 60 can be suitably connected and adapted, so that they can control the starting step of the compressor as well.

The invention achieves important advantages.

First of all, the control group for compressors in accordance with the present invention is provided with a control system of the starting step that is adapted to operate with very reduced consumptions as compared with the systems of known type, above all during the operating step of the compressor under normal working conditions.

In addition, the system for the overload control of the control group in accordance with the present invention is very reliable in detecting excessive temperature rises and therefore in signalling possible failures or malfunctions.

Another advantage found with the present invention refers to the great adaptability of the system for the overload control herein used which can be associated with compressors of different features without involving substantial modifications or adaptations.

Finally, the present invention enables an important increase in the energy efficiency of a refrigerating apparatus, since the compressor can work under conditions of partial load due to the possibility of restricting current on the operation winding of the compressor.

In association with the above it is also to be pointed out that, due to the structure of the present invention, functions involving overload control and power modulation can be integrated into a single device, with clear benefits in terms of manufacture economy, construction simplicity and reliability.

## Claims

1. A device for the overload control of a compressor, in particular for refrigerating apparatuses, **characterised in that** it comprises.
- a detecting block (40), to read a characteristic magnitude (110) of the compressor;
- a memory (50) set to contain a predetermined number of reference values corresponding to said characteristic magnitude (110) ;
- a processing unit (60), connected to said detecting block (40) and said memory (50) and capable of:
- processing the characteristic magnitude (110) read by the detecting block (40), to obtain a corresponding main parameter;
- comparing the main parameter with at least one of said reference values held in the memory (50);
- generating an alarm signal (100) depending on said comparison.

2. A device as claimed in claim 1, characterises in that said main parameter of the compressor is a main parameter of one of the compressor windings.

3. A device as claimed in claim 2, **characterised in that** said main parameter is a characteristic parameter of a starting winding (30) of the compressor.

4. A device as claimed in claim 3, **characterised in that** said characteristic parameter of the starting parameter (30) is a parameter of the electric type.

5. A device as claimed in anyone of the preceding claims, **characterised in that** said characteristic magnitude (110) of the compressor is a characteristic magnitude of one of the compressor windings and, preferably, a characteristic magnitude of the starting winding (30).

6. A device as claimed in claim 5, **characterised in that** said characteristic magnitude of the starting winding (30) is an electric magnitude.

7. A device as claimed in claim 6, **characterised in that** said characteristic magnitude is a current running through the starting winding (30), said detecting block (40) comprising:
- a voltage generator (41), to be connected with said starting winding (39) to apply a predetermined voltage to said winding (30);
- a current-reading unit (42), to read the current passing through the starting winding (30) upon application of said predetermined current.

8. A devise as claimed in claim 7, **characterised in that** said main parameter of the starting winding (30) is the electric resistance, said processing unit (60) being able to calculate the electric resistance of the starting winding (30), depending on the voltage imposed by the voltage generator (41) and on the current read by the current-reading unit (42).

9. A device as claimed in claim 7 or 8, **characterised in that** said voltage generator (41) is set to supply the starting winding (30) with said predetermined voltage within predetermined time gaps spaced apart the same distance from each other and preferably having the same time duration.

10. A device as claimed in claims 7, 8 or 9, **characterized in that** said voltage generator (41) is a direct-voltage generator, said predetermined voltage preferably having a square wave course, in particular said square wave substantially having the same frequency as that of a supply current.

11. A device as claimed in claim 6, **characterised in that** said characteristic magnitude is a voltage at the extremities of the starting winding (30), said detecting block (40) comprising:
- a current generator (43), to be connected to said starting winding (30), to make a predetermined current run in said winding (30);
- a voltage-reading unit (44) to read voltage at the extremities of the starting winding (30), upon passage of said predetermined current (30) through the winding (30).

12. A device as claimed in claim 11, **characterised in that** said main parameter of the starting winding (30) is the electric resistance, said processing unit (60) being able to calculate the electric resistance of the starting winding (30), depending on the current generated by the current generator (43) and on the voltage read by the voltage-reading unit (44).

13. A device as claimed in claim 11 or 12, **characterised in that** said current generator (43) is set to supply the starting winding (30) with said predetermined current within predetermined time gaps, spaced apart the same distance from each other and, preferably, having the same time duration.

14. A device as claimed in claim 11, 12 or 13, **characterised in that** said current generator (43) is a direct-current generator, said predetermined current preferably having a square wave course, in particular said square wave substantially having the same frequency as that of a supply current.

15. A device as claimed in claim 8 or 12, **characterised in that** said processing unit (60) is further able to verify whether the electric resistance calculated by the processing unit (60) is greater than said reference value and correspondingly generate said alarm signal (100).

16. A device as claimed in anyone of the preceding claims, **characterised in that** said detecting block (40) is further set to detect an auxiliary characteristic magnitude of the compressor, preferably at one of the compressor windings, and most preferably at a starting winding (30) of the compressor, said processing unit (60) being further adapted:
- to process the auxiliary characteristic magnitude read by the detecting block (40), to obtain the predetermined reference value;
- to store said predetermined reference value into the memory (50).

17. A compressor, in particular for refrigerating apparatuses, **characterised in that** it comprises a device for the overload control (3) as claimed in anyone of the preceding claims.

18. A method of controlling overload of a compressor, in particular for refrigerating apparatuses, **characterised in that** it comprises the following steps:
- detecting a characteristic magnitude (110) of the compressor;
- processing said characteristic magnitude (110) to obtain a corresponding main parameter;
- comparing said main parameter with at least one predetermined previously-stored reference value;
- generating an alarm signal (100) depending on said comparison.

19. A method as claimed in claim 18, **characterised in that** said main parameter of the compressor is a main parameter of one of the compressor windings.

20. A method as claimed in claim 19, **characterised in that** said main parameter of the compressor is a main parameter of a starting winding (30) of the compressor.

21. A method as claimed in claim 20, **characterised in that** said main parameter is a parameter of the electric type.

22. A method as claimed in anyone of claims 18 to 21, **characterised in that** said characteristic magnitude (110) of the compressor is a characteristic magnitude of one of the compressor windings and, preferably, a characteristic magnitude of the starting winding (30).

23. A method as claimed in claim 22, **characterised in that** said characteristic magnitude of the starting winding (30) is an electric magnitude.

24. A method as claimed in claim 23, **characterised in that** said detecting step comprises the following sub-steps:
- applying a predetermined voltage to the extremities of the starting winding (30);
- reading the current running in the starting winding (30), upon application of said predetermined voltage.

25. A method as claimed in claim 22, **characterised in that** said processing step comprises a sub-step of calculating the electric resistance of the starting winding (30) depending on said predetermined voltage and on the current read.

26. A method as claimed in claim 21, **characterised in that** said detecting step comprises the following sub-steps:
- making a predetermined current run in the starting winding (30);
- reading the voltage at the extremities of the starting winding (30), upon passage of said predetermined current through the winding (30).

27. A method as claimed in claim 23, **characterized in that** said processing step comprises a sub-step of calculating the electric resistance of the starting winding (30) depending on said predetermined current and on the voltage read at the extremities of the winding (30).

28. A method as claimed in claim 23 or 25, **characterized in that** said comparing step comprises a sub-step of verifying whether the calculated electric resistance is greater than the previously stored predetermined reference value.

29. A method as claimed in anyone of claims 18 to 28, **characterized in that** said predetermined reference value is obtained through a preliminary acquisition step, preferably carried out before said step of detecting the characteristic magnitude (110) of the compressor, said preliminary acquisition step comprising the following sub-steps:
- detecting an auxiliary characteristic magnitude of the compressor, preferably at one of the windings of the compressor, and most preferably at a starting winding (30) of the compressor;
- processing said auxiliary characteristic magnitude, to obtain said predetermined reference value;
- storing said predetermined reference value into a memory (50).

30. A device for the starting control of a compressor as claimed in anyone of claims 1 to 16, **characterised in that** it further comprises:
- a thermosensitive element (10) to be associated with a starting winding (30) of said compressor; and
- a switch (20) associated in circuit with at least the thermosensitive element (10), which switch (20) can be piloted between a first operating condition, in which it enables a supply current to be delivered to the starting winding (30), and a second operating condition in which it inhibits inflow of said supply current to the starting winding (30), said thermosensitive element (10) being operatively active on the switch (20) to pilot it between the first and second operating conditions.

31. A device as claimed in claim 30, **characterised in that** said switch (20) has a first end (20a) to be connected to an end (30a) of the starting winding (30) and a second end (20b) arranged to receive a command signal, said command signal piloting the switch (20) between the first and second operating conditions.

32. A device as claimed in claim 31, **characterized in that** said switch (20) comprises a semiconductor element.

33. A device as claimed in claim 32, **characterised in that** said semiconductor element is a Triac, said second end (20b) being a gate of said Triac.

34. A device as claimed in claim 31, 32 or 33,
**characterised in that** said switch (20) further comprises a third end (20c) connected to a fixed-potential node and preferably to the ground.

35. A device as claimed in anyone of claims 30 to 34, **characterised in that** said thermosensitive element (10) has a first end (10a) to be connected with a fixed-potential node, and a second end (10b) connected with the second end (20b) of the switch (20) to supply said command signal.

36. A device as claimed in anyone of claims 30 to 35, **characterised in that** said thermosensitive element (10) is a thermistor (11), said command signal being preferably a current passing through the thermistor (11).

37. A device as claimed in claim 36, **characterised in that** said thermistor (11) is of the PTC type.

38. A device as claimed in claim 36, **characterised in that** said thermistor (11) is of the NTC type.

39. A device as claimed in claim 36, **characterised in that** said thermistor (11) is of the direct-heating type.

40. A device as claimed in claim 36, **characterised in that** said thermistor (11) is of the indirect-heating type.

41. A device as claimed in claim 40, **characterised in that** said thermistor (11) can be associated with an electrothermal element.

42. A device as claimed in claim 40, **characterised in that** it further comprises an auxiliary winding, associated with the thermistor (11) and preferably wound around the thermistor (11), said auxiliary winding being set to be passed through an auxiliary current, to supply heat to the thermistor (11) at the end of the starting step of the compressor.

43. A compressor, in particular for refrigerating apparatuses, **characterised in that** it comprises a device for the starting control (2) as claimed in anyone of claims 30 to 42.

44. A control group for compressors (1), in particular for compressors of refrigerating apparatuses, **characterised in that** it comprises:
- a device for the overload control (3) as claimed in anyone of claims 1 to 16; and
- a device for the starting control (2) as claimed in anyone of claims 30 to 42.

45. A compressor, in particular for refrigerating apparatuses, **characterised in that** it comprises a control group (1) as claimed in claim 44.
